# EUROPÄISCHE PATENTSCHRIFT

(11) **EP 1 951 500 B1**
(45) Veröffentlichungstag und Bekanntmachung des Hinweises auf die Patenterteilung: **29.08.2018**
(21) Anmeldenummer: 06804397.5
(22) Anmeldetag: 23.11.2006
(51) Int. Cl.: B29C 47/40, B29C 47/08, B29C 47/38, B29C 47/44, B30B 11/24

(54) **VORRICHTUNG ZUR VERARBEITUNG VON MATERIAL DURCH MISCHUNG UND BZW, ODER PLASTIFIZIERUNG**
DEVICE FOR PROCESSING MATERIAL BY MIXING AND/OR PLASTICISATION
DISPOSITIF POUR TRAVAILLER UN MATÉRIAU PAR MÉLANGE ET/OU PLASTIFICATION

(30) Priorität: 25.11.2005 AT 19152005
(43) Veröffentlichungstag der Anmeldung: 06.08.2008
(73) Patentinhaber: Schulz, Katharina, 1090 Wien (AT)
(72) Erfinder: SCHULZ, Helmuth, deceased (AT)
(74) Vertreter: Patentanwaltskanzlei Hübscher
(86) Internationale Anmeldenummer: PCT/AT2006/000478
(87) Internationale Veröffentlichungsnummer: WO 2007/059547

(56) Entgegenhaltungen:
- EP-A- 0 315 143
- EP-A1- 0 598 376
- CN-A- 1 644 341
- DE-A1- 3 420 918
- DE-A1- 3 504 390
- DE-A1- 4 129 913
- DE-B- 1 200 517
- US-A- 3 506 066
- US-B1- 6 234 661

## Beschreibung

Die Erfindung bezieht sich auf eine Vorrichtung zur Verarbeitung von Kunststoffen durch Mischung und Plastifizierung, mit zumindest zwei nebeneinander in einem gemeinsamen Schneckengehäuse angeordneten Schnecken, deren Schneckengänge miteinander in Eingriff stehen und zum Umlauf um die jeweilige Schneckenachse durch zumindest einen Motor angetrieben sind, wobei das zu verarbeitende Kunststoffmaterial den Schnecken durch zumindest eine im Bereich des einen Stirnendes der Schnecken angeordnete Einzugsöffnung des Schneckengehäuses zugeführt wird und das von den Schnecken verarbeitete Material das Schneckengehäuse durch zumindest eine im Bereich des anderen Stirnendes der Schnecken angeordnete Austrittsöffnung des Schneckengehäuses verlässt, mit einer den zwischen einander benachbarten Schneckengängen der Schnecken bestehenden Spalt oszillierend verändernden Einrichtung, welche Oszillation den Umlaufbewegungen der Schneckengänge der Schnecken überlagerbar ist. Weiters bezieht sich die Erfindung auf ein Verfahren zur Materialverarbeitung durch Mischung und bzw. oder Plastifizierung oder Agglomerierung. Eine Vorrichtung der eingangs beschriebenen Art, ein Doppelschneckenextruder zum Verarbeiten plastischer Materialien mit gegensinnig angetriebenen Schneckenspindeln ist beispielsweise aus der DE 15 29 812 A bekannt, aber als mit gravierenden Nachteilen behaftet beschrieben. Gattungsgemäße Vorrichtungen sind zudem aus der US 3 506 066 A1, der EP 315 143 A2, der DE 41 29 913 A1 und der DE 20 41 885 A bekannt. Ein Doppelschneckenextruder mit konischen Schnecken ist aus der EP 0 598 376 A Das Dokument EP 315143 offenbart eine Vorrichtung zur Verarbeitung von Kunststoffen gemäss dem Oberbegriff des Anspruchs 1. Ein häufiges Anwendungsgebiet für Doppelschneckenextruder ist die Mischung unterschiedlicher Polyolefinarten bzw. die Compoundierung von Kunststoffen unterschiedlicher Art, z.B. Polyethylen niederer und hoher Dichte oder Polypropylen mit Polyethylen. Derartige Materialarten werden häufig für die Herstellung von Blasfolien bzw. Spritzgussartikeln benötigt. Wichtig hierbei ist die Erzielung eines hohen Mischgrades und diesbezüglich konnten die bisher bekannten Doppelschneckenextruder nicht völlig befriedigen.

Ein anderes Anwendungsgebiet ist die Verarbeitung von Kunststoffmaterialien, insbesondere thermoplastischer Kunststoffe, zwecks Erzeugung einer Recyclingware, die sich für die Verwendung auf dem Gebiet der Lebensmittelverpackungen eignet, wie z.B. PET (Polyethylenterephthalat). Derartige Kunststoffmaterialien liegen zumeist als loses Schüttgut vor, dessen spezifisches Gewicht vergleichsweise gering ist. Dies hat zur Folge, dass zur Erzielung eines ausreichenden Durchsatzes große Mengen an zu verarbeitenden Material im Einzugsbereich der Schnecken aufgenommen werden müssen. Diese Materialmengen müssen dann im Verlaufe des durch die Schnecken erfolgenden Transportes von der Einzugsöffnung zur Austrittsöffnung auf das gewünschte Maß plastifiziert bzw. agglomeriert werden, um am Ausgang ein Produkt der gewünschten Qualität zu erhalten. Durch Wahl einer geeigneten Geometrie der Schneckengänge lässt sich dieses Problem zu gewissem Grad bewältigen, jedoch steht dem entgegen, dass die Verhältnisse beim zu verarbeitenden Kunststoffmaterial nicht immer gleich sind, insbesondere was die Größe der zu verarbeitenden Materialteile betrifft, aber auch deren Materialart, Verschmut-zungsgrad usw. Auch diesbezüglich haben sich die bekannten Doppelschnecken-extruder als nicht völlig befriedigend erwiesen.

Aber auch andere Anwendungsgebiete für Vorrichtungen der eingangs beschriebenen Art sind denkbar, z B die Verarbeitung von Makromolekülmaterial unterschiedlichster Art, also sowohl organische als auch anorganische Makromoleküle. Unter ersteren sind sowohl natürliche Polymere (Biopolymere) zu verstehen, also z. B. Polysaccharide, wie Zellulose, Stärke usw., Polylactide, Polyisoprene, z. B. Kautschuk, usw., als auch synthetische Polymere unterschiedlichster Art, von weichen Thermoplaste die bedeutsamste Art sind. Unter anorganischen Makromolekülen sind Polysiloxane und Silikagele die wichtigsten. Ein weiteres Anwendungsgebiet ist die Mischung mineralischer Materialien in pulveriger oder pastöser Form, z. B. Tonerde oder andere Ausgangsmaterialien für die unterschiedlichsten Anwendungsgebiete. Auch für diese Anwendungsfälle kommt es bei der Verarbeitung auf einen Misch-grad an, um ein möglichst homogenes Ausgangsmaterial zu erhalten bzw. das in grobstückiger Form vorliegende Ausgangsmaterial zielführend zu zerkleinern und zu homogenisieren.

Die Erfindung setzt sich nun zur Aufgabe, auf einem anderen Weg die geschilderten Probleme zu lösen und die Verarbeitung eines breiten Spektrums an Materialienarten zu verbessern, sodass das am Ausgang der Vorrichtung erhaltene Produkt den in letzter Zeit immer weiter gesteigerten Anforderungen genügt. Dies gilt sowohl für die Erzielung eines verbesserten Mischgrades im Vergleich zu bekannten Konstruktionen im Falle der Verarbeitung unterschiedlicher Materialarten im weitesten Sinn, als auch hinsichtlich einer Verbesserung der Qualität von Kunststoffware, insbesondere von Recyclingware, die auf dem Gebiet der Lebensmittelverpackung eingesetzt werden soll. Zugleich soll der technische Aufwand vergleichsweise gering bleiben, sodass an Erstellungskosten der Vorrichtung gespart wird.

Die Erfindung löst diese Aufgabe durch die Merkmale des Anspruchs 1. Werden diese Merkmale verwirklicht, eignet sich die erfindungsgemäße Vorrichtung insbesondere zum Aufbereiten von Recyclingmaterial, wobei zudem ein verbesserter Mischgrad erzielt wird.

Bei gleichlaufenden konischen Doppelschneckenextrudern ist im Einzugsbereich des Materiales der Schneckendurchmesser größer als am Austrittsende, wodurch sich im Laufe des Materialtransportes von selbst eine Verdichtung des Materiales ergibt, als Folge des durch die Schneckengeometrie gegebenen Durchmesserunterschiedes. Der erwähnte große Durchmesser im Einzugsbereich kommt dem eingangs erwähnten Umstand entgegen, dass es sich häufig um die Verarbeitung loser Schüttgüter handelt, die durch das große Aufnahmevolumen im Einzugsbe-reich problemloser aufgenommen werden können als bei Konstruktionen anderer Bauart. Durch die kontinuierliche Verringerung des dem Material zur Verfügung stehenden Volumens zur Schneckenspitze hin kommt es bei gleichbleibender Schneckensteigung automatisch zu der gewünschten Materialverdichtung, und die Schneckengänge bleiben immer zumindest annähernd gleichmäßig gefüllt. Weiters liegt im Einzugsbereich durch die höhere Umfangsgeschwindigkeit großer Teile der Schneckengänge eine von den miteinander kämmenden Schneckengängen ausgeübte erhöhte Friktion vor, was bei der Verarbeitung zahlreicher Materialarten günstig ist, insbesondere bei thermoplastischen Kunststoffen, die plastifiziert bzw. agglomeriert werden sollen. Diese erhöhte Friktion wird noch unterstützt durch die mittels der Erfindung zusätzlich zur erwähnten Materialverdichtung erzielte Knetwirkung. Es hat sich gezeigt, dass mit solchen erfindungsgemäßen Konstruktionen bei wesentlich kürzeren Schneckenlängen ähnliche Resultate erzielt werden können, wie dies bei bekannten Konstruktionen mit großer Schneckenlänge möglich war.

Ein weiterer Vorteil konischer Doppelschneckenextruder liegt darin, dass im Ein-zugsbereich der Kerndurchmesser der Schnecken vergleichsweise groß gehalten werden kann, sodass ein hohes Drehmoment auf diese Bauteile übertragen werden kann. Die Bruchgefahr ist daher wesentlich geringer als bei bekannten Konstruktionen. Dies ist besonders wichtig, da man es ja häufig mit zu regenerierenden Materialien zu tun hat, in denen Fremdkörper, wie Stahlteile, Steine od. dgl. häufig vorhanden sind. Erfindungsgemäss ist eine behaftete Einrichtung ausgestattet, die im Betrieb der Vorrichtung dem Spalt, der zwischen einander benachbarten Schneckengängen der Schnecken besteht, abwechselnd eine periodische Vergrößerung bzw. Verkleinerung verleiht, welche den Umlaufbewegungen der Schneckengänge der Schnecken überlagert ist. Auf diese Weise ergibt sich eine laufende Vergrößerung bzw. Verkleinerung des Flankenspieles von der einen zur anderen Schnecke, also eine oszillierende Veränderung der Spaltbreite. Dies bewirkt überraschenderweise bei gleichläufigen Schnecken einen sehr hohen Mischgrad und es wird eine bessere Verarbeitung des Materiales erzielt, denn bei jeder Umdrehung der Schnecken ergibt sich eine Quetsch- bzw. Knetwirkung in axialer Richtung. Außerdem bewirkt die Annäherung benachbarter Schneckengänge bei Verkleinerung des Spaltes auch einen erwünschten Selbstreinigungseffekt.

Wenngleich die vorliegende Erfindung in erster Linie bei Doppelschneckenextruder Bedeutung hat so ist es durchaus möglich, das erfindungsgemäße Prinzip auch bei Vorrichtungen anzuwenden, welche mehr als zwei miteinander zusammenwirkende Schnecken aufweisen.

Im Rahmen der Erfindung bestehen mehrere prinzipielle Möglichkeiten, die erwähnte oszillierende Vergrößerung bzw. Verkleinerung des Spaltes bei laufendem Betrieb zu erreichen. Eine bevorzugte Ausführungsform im Rahmen der Erfindung besteht darin, dass die Einrichtung für eine der Schnecken eine Gelenkwelle für den Drehantrieb dieser Schnecke aufweist, weiche Gelenkwelle zwei miteinander drehschlüssig verbundene Kardangelenke aufweist, deren eines an seiner Antriebsseite mit einer vom Motor angetriebenen Antriebswelle drehschlüssig verbunden ist, wogegen das andere an seiner Abtriebsseite mit einer mit der Schnecke drehschlüssig verbundenen Abtriebswelle drehschlüssig verbunden ist. wobei die Achsrichtung der Abtriebswelle von der Achsrichtung der Antriebswelle abweicht und bzw. oder die beiden Kardangelenke um die sie verbindende Achse relativ zueinander verschwenkt sind. Durch diese Abweichung der Richtungen von Abtriebswelle und Antriebswelle bzw. durch die Relativverdrehung der beiden Kardangelenke ergibt sich für die über eine solche Getriebeeinheit angetriebene Schnecke eine periodische Verlangsamung bzw. Beschleunigung der Umlaufbewegung, was gleichbedeutend ist mit der erwähnten Verringerung bzw. Vergrößerung des zwischen den Schneckengängen der beiden Schnecken bestehenden Spaltes. Vorteilhaft ist hierbei auch, dass sich eine derartige Konstruktion in einfacher Weise auf unterschiedliche vorliegende Verhältnisse anpassen lässt, z.B. dadurch, dass die Achsrichtung der Abtriebswelle relativ zur Achsrichtung der Antriebswelle einstellbar veränderbar ist, was sich auf die Art, in welcher der Spalt oszillierend vergrößert bzw. verkleinert wird, auswirkt. Eine andere Möglichkeit zur Veränderung der Größe bzw. Art der oszillierenden Veränderung der Spaltbreite besteht gemäß der Erfindung darin, dass eine Kupplung vorhanden ist, mit der die Drehlage des einen Kardangelenkes relativ zum anderen Kardangelenk einstellbar veränderbar ist.

Eine andere prinzipielle Möglichkeit zur periodischen Veränderung des erwähnten Spaltes bei laufenden Betrieb besteht im Rahmen darin, dass die Einrichtung die Schnecken unterschiedlich zur Umlaufbewegung antreibt, wobei eine Schnecke mit konstanter Drehzahl angetrieben ist, wogegen eine andere Schnecke mit einer der konstanten Drehzahl überlagerten periodischen Beschleunigung bzw. Verzögerung angetrieben ist. Durch an sich bekannte elektronische Einrichtungen lässt sich eine derartige Drehzahlsteuerung problemlos erzielen. Eine solche Steuerung lässt sich natürlich auch so durchführen, dass die Größe und bzw. Art der periodischen Beschleunigung bzw. Vergrößerung einstellbar veränderbar ist.

Eine weitere Möglichkeit, die erwähnte periodische Veränderung der Spaltweite bei laufenden Betrieb zu erzielen, besteht im Rahmen der Erfindung darin, dass die Einrichtung eine begrenzte Verschiebbarkeit einer Schnecke in ihrer Achsrichtung im Schneckengehäuse vorsieht und dass ein zusätzlicher Antrieb für diese Schnecke vorhanden ist, welcher der Schnecke eine ihrem Umlauf überlagerte periodische Hin- und Herverschiebung in Achsrichtung verleiht. Während bei den bisher beschriebenen Ausführungsformen die axiale Lage der beiden Schnecken ungeändert bleibt und die erwähnte Spaltveränderung durch Veränderung der Drehzahl einer Schnecke erzielt wird, ist es bei der zuletzt beschriebenen Ausführungsform anders: Eine Schnecke wird in ihrer axialen Lage hin- und herverschoben, jedoch, ebenso wie die andere(n) Schnecke(n), stets mit konstanter Drehzahl angetrieben. Im Rahmen dieser prinzipiellen Konstruktionsart bestehen wieder mehrere Möglichkeiten, so kann der zusätzliche Antrieb für die verschiebbare Schnecke eine ortsfeste Kurvenbahn aufweisen, an der ein mit der Schnecke verbundener Stössel abläuft, oder es kann der zusätzliche Antrieb von einem die periodische Hin- und Herbewegung der Schnecke bewirkenden Kolben-Zylinder-Aggregat gebildet sein.

Im Prinzip können sogar die einzelnen erwähnten prinzipiellen Varianten miteinander kombiniert angewendet werden. So ist es z.B. problemlos möglich, die oben beschriebene Kardangelenk-Konstruktion zu kombinieren mit einer Steuerung der Drehzahl der betreffenden Schnecke, usw. In der Regel wird man jedoch mit einer der erwähnten Varianten problemlos das Auslangen finden.

Das Ausmaß der Veränderung des erwähnten Spaltes zwischen benachbarten Schneckengängen ist lediglich dadurch begrenzt, dass eine Verringerung der Spaltweite nur bis zur Berührung der beiden Schneckengänge getrieben werden kann. Wie Versuche gezeigt haben, wird man jedoch mit einer 40 bis 60 %-igen Veränderung der Spaltweite auskommen (bezogen auf die maximal mögliche Spaltweite). Besonders günstige Verhältnisse haben sich mit einer 50%-igen Veränderung der Spaltweite ergeben.

Das erfindungsgemäße Verfahren zur Kunststoffmaterialverarbeitung durch Mischung und Plastifizierung unter Verwendung der erfindungsgemäße Vorrichtung nach einem der Ansprüche 1-11, unter Verwendung zumindest zweier in einem gemeinsamen Gehäuse gelagerten, motorisch angetriebenen Schnecken, deren Schneckengänge so einander benachbart liegen, dass zwischen den Schneckengängen der Schnecken ein Spalt besteht, besteht darin, dass das Material zusätzlich zur Verdichtung, die durch die Förderwirkung der Schnecken bewirkt wird, einer periodischen Quetschung durch die Schnecken unterworfen wird. Insbesondere wird hierbei die periodische Quetschung durch periodische Drehzahländerung zumindest einer Schnecke und bzw. oder durch periodische Verlagerung zumindest einer Schnecke in ihrer Achsrichtung erzielt.

In der Zeichnung sind Ausführungsbeispiele des Erfindungsgegenstandes schematisch dargestellt.
Fig. 1 zeigt ein erstes Ausführungsbeispiel der Erfindung im Längsschnitt.
Fig. 2 zeigt ein Detail der Konstruktion nach Fig. 1 in größerem Maßstab.
Fig. 3 zeigt ein Detail der Fig. 2 im auseinandergenommenen Zustand und
Fig. 4 ist ein Schnitt nach der Linie IV-IV der Fig. 3.
Fig. 5 zeigt die Verringerung bzw. Vergrößerung des Spaltes. Fig. 6 zeigt ein weiteres Ausführungsbeispiel im Längsschnitt. Die Fig. 7 und 8 zeigen je ein weiteres nicht erfindungsgemäßes Ausführungsbeispiel im Längsschnitt.
Fig. 9 zeigt schematisch die zur Befüllung der Vorrichtung dienenden Bauteile in Seitenansicht, teilweise im Schnitt.
Fig. 10 ist eine Draufsicht zu Fig. 9, teilweise im Schnitt.
Fig. 11 zeigt eine Ausführungsvariante zu Fig. 9.

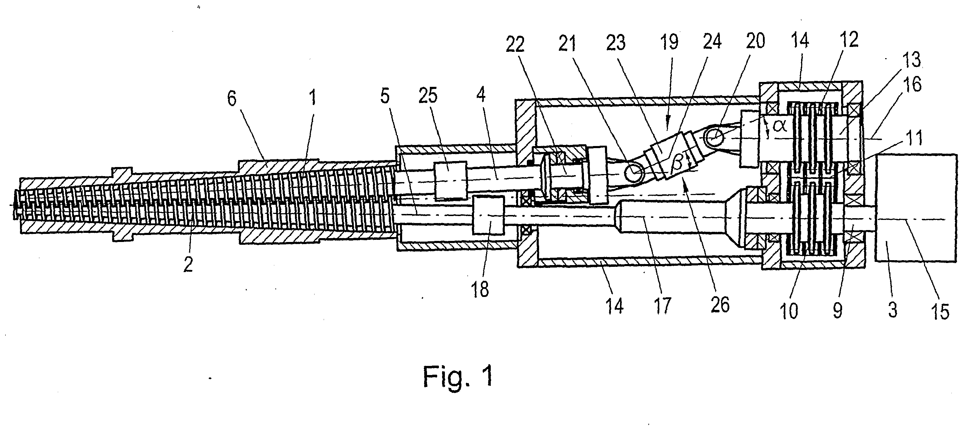

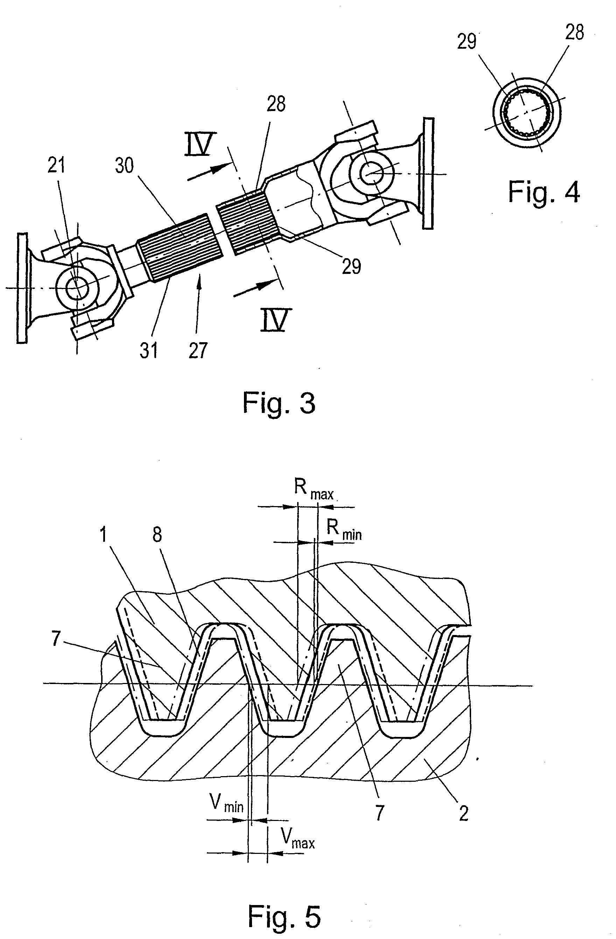

Das Ausführungsbeispiel nach den Fig. 1 bis 5 zeigt einen Doppelschneckenextruder mit zwei konischen Schnecken 1, 2, die von einem gemeinsamen Motor 3 zum gleichsinnigen Umlauf um ihre Achsen 4, 5 angetrieben sind. Die Konizität der Schnecken 1, 2 bedingt, dass ihre Achsen 4, 5 einen spitzen Winkel miteinander einschließen. Die beiden Schnecken 1, 2 sind in einem gemeinsamen Schneckengehäuse 6 gelagert und greifen mit ihren Schneckengängen 7 (Fig. 5) ineinander ein, die Schneckengänge kämmen also miteinander, liegen jedoch im axialen Abstand von einander, sodass zwischen den Schneckengängen 7 der beiden Schnecken 1, 2 jeweils ein Spalt 8 (Fig. 5) verbleibt.

Der Motor 3 treibt eine Antriebswelle 9 an, auf der mehrere Kettenräder 10 sitzen, die über Antriebsketten 11 mit weiteren Kettenrädern 12 verbunden sind, die auf einer weiteren Welle 13 sitzen. Die beiden Wellen 9, 13 sind in einem gemeinsamen Gehäuse 14 drehbar gelagert und über die Antriebsketten 11 im gleichen Umlaufsinn angetrieben. Ihre Achsen 15, 16 sind zueinander parallel. Die Achse 15 der Welle 9 fällt mit der Achse der Schnecke 2 zusammen. Die Welle 9 ist über eine Verlängerung 17 mit den Kern der Schnecke 2 drehschlüssig verbunden. Die Welle 9 mit ihrer Verlängerung 17 kann einstückig mit dem Kern der Schnecke 2 ausgebildet sein. Wenn eine solche Ausbildung aber zu lang wird, kann zwischen der Verlängerung 17 und dem Kern der Schnecke 2 eine Kupplung 18 vorgesehen sein. Dadurch wird nicht nur die Herstellung der Schnecke 2 erleichtert, sondern auch ihr Ausbau, etwa zwecks Ersatz oder Wartung. Die andere Welle 13 ist über eine Einrichtung 19 mit der Schnecke 1 verbunden, welche Einrichtung 19 beim Umlauf der Antriebswelle 13 der Schnecke 1 eine periodische Beschleunigung bzw. Verzögerung der Umlaufgeschwindigkeit verleiht. Hierfür weist die Einrichtung 19 zwei dreh-schlüssig miteinander verbundene Kardangelenke 20, 21 auf, Das eine Kardange-lenk 20 ist mit der Welle 13 drehschlüssig verbunden, das andere Kardangelenk 21 mit einer Verbindungswelle 22, die mit dem Kern der Schnecke 1 einstückig ausgebildet sein kann oder über eine Kupplung 25 mit dem Kern der Schnecke 1 drehschlüssig verbunden ist. Die beiden Kardangelenke 20, 21 bilden zusammen mit einem sie verbindenden Gestänge 23 eine Gelenkwelle 26. Das Gestänge 23 kann im einfachsten Fall von einer Stange gebildet sein, deren Achse mit 24 bezeichnet ist. Da die Achsen 4, 5 der beiden Schnecken 1, 2 nicht parallel zueinander liegen, die Achsen 15, 16 der beiden Antriebswellen 9, 13 hingegen schon, ist der Winkel a zwischen der Achse 16 der Welle 13 und der Achse 24 des Gestänges 23 größer als der Winkel β, weichen die Achse 24 des Gestänges 23 mit der Achse 4 der Schnecke 1 einschließt. Die Differenz der beiden Winkel α, β bildet einen Beugungswinkel, der zur Folge hat, dass die, die beiden Kardangelenke 23, 24 aufweisende Gelenkwelle 26 die erwähnte Beschleunigung bzw. Verzögerung der Umlaufbewegung der Schnecke 1 bewirkt. Die Schnecke 2 wird hingegen mit konstanter Umlaufgeschwindigkeit angetrieben.

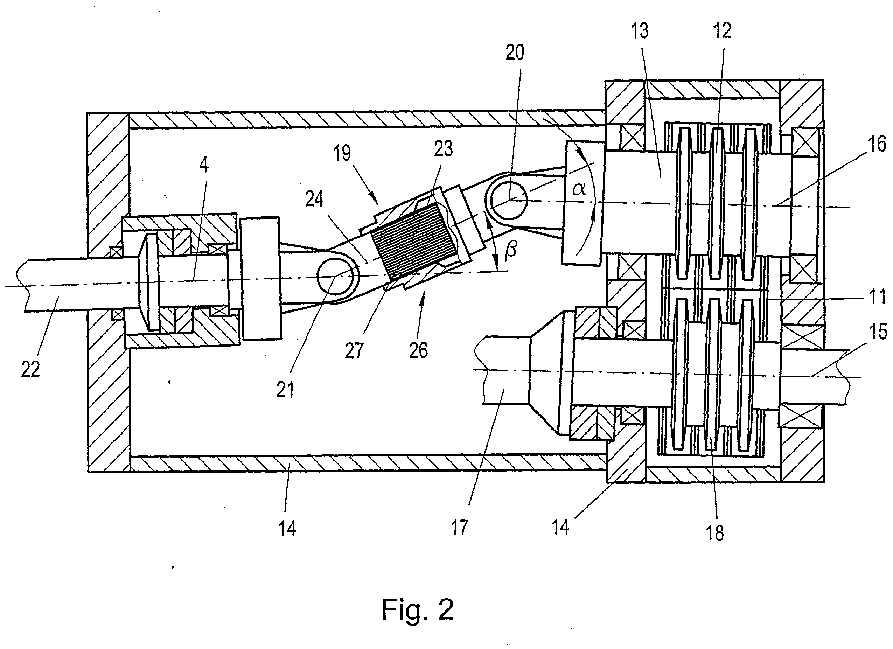

In Fig. 2 ist dieser Antrieb der Verbindungswelle 22 in größerem Maßstab darge-stellt. Wie ersichtlich, ist die Antriebsseite des Kardangelenkes 20 mit der vom Motor 3 angetriebenen Antriebswelle 13 drehschlüssig verbunden. Das andere Kardangelenk 21 ist an seiner Abtriebsseite mit der Verbindungswelle 22 dreh-schlüssig verbunden, welche ihrerseits, gegebenenfalls über die Kupplung 25, mit dem Kern der Schnecke 1 drehschlüssig verbunden ist. Die Abtriebsseite des Kardangelenkes 20 ist mit der Antriebsseite des Kardangelenks 21 in der für Gelenkwellen üblichen Weise drehschlüssig verbunden. Diese Verbindung ist jedoch winkelmäßig einstellbar, so dass die erwähnte Verzögerung bzw. Beschleunigung des Umlaufes der Schnecke 1 variierbar ist. Hierzu weist das die beiden Kardangelenke 20, 21 drehschlüssig verbindende Gestänge 23 eine Kupplung 27 auf, mit welcher die Drehlage des abtriebsseitigen Kardangelenkes 21 relativ zum antriebsseitigen Kardangelenk 20 einstellbar veränderbar ist, und zwar um die die beiden Kardangelenke 20, 21 verbindende Achse 24. Diese Kupplung 27 ist in Fig. 3 im auseinandergenommenen Zustand dargestellt. Sie weist eine mit der Abtriebsseite des Kardangelenkes 20 drehschlüssig verbundene Steckbuchse 28 auf, die mit einer Innenverzahnung 29 versehen ist. In diese Innenverzahnung 29 ist eine Verzahnung 30 passend einsteckbar, die am Umfang eines Steckzapfens 31 angeordnet ist, der mit der Antriebsseite des Kardangelenkes 21 drehschlüssig verbunden ist.

In Fig. 5 ist die durch die erwähnte periodisch sich ändernde

Umlaufgeschwindigkeit der Schnecke 1 bewirkte Vergrößerung bzw. Verkleinerung des Spaltes 8 näher dargestellt, welcher Spalt zwischen den Schneckengängen 7 der beiden Schnecken 1, 2 besteht. Für den Schneckengang 7 der Schnecke 1 ergibt sich an seiner, in Förderrichtung der Schnecken gesehen, vorne liegenden Seite im Betrieb eine maximale Spaltbreite Vmax und eine minimale Spaltbreite Vmin. In analoger Weise ergibt sich an der Hinterseite des Schneckenganges 7 der Schnecke 1 eine maximale Spaltbreite Rmax und eine minimale Spaltbreite Rmin. Diese minimale Spaltbreite kann so gering eingestellt werden, dass eine Berührung einander gegenüberliegender Schneckengänge 7 der beiden Schnecken 1, 2 gerade noch vermieden ist. In der Praxis kommt man jedoch in der Regel mit einer 40 bis 60%-igen Veränderung des Schneckenspaltes aus, bezogen auf das maximal mögliche Ausmaß des Spaltes 8. In der Regel ist es nicht erforderlich, das Profil der Schneckengänge 7 gegenüber herkömmlichen Profilformen zu verändern. In Sonderfällen kann es jedoch angezeigt sein, bedingt durch die erwähnte Verringerung bzw. Vergrößerung des Spaltes 8, das Profil der Schneckengänge 7 entsprechend anzupassen.

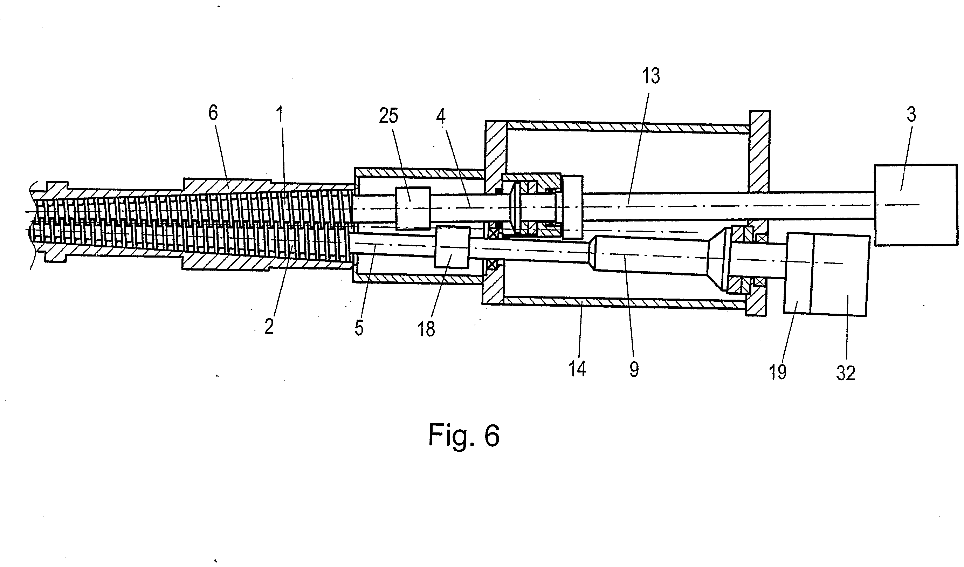

Die Ausführungsform nach Fig. 6 zeigt gleichfalls einen Doppelschneckenextruder, dessen gleichsinnig umlaufende Schnecken 1, 2 konisch ausgebildet sind, sodass die Schneckenachsen 4, 5 zueinander nicht parallel liegen. Sei dieser Ausführungsform wird die erwähnte Verzögerung bzw. Beschleunigung der Umlaufbewegung einer der Schnecken (bezogen auf die konstante Umlaufbewegung der anderen Schnecke) nicht durch eine Gelenkwelle erzielt, sondern es sind für die beiden Schnecken 1, 2 gesonderte Motors 3, 32 vorgesehen. Der Motor 3 treibt die Schnecke 1 mit konstanter Umfangsgeschwindigkeit an (die jedoch wählbar einstellbar sein kann), der Motor 32 ist hingegen mit der erwähnten Einrichtung 19 versehen, die der von ihm angetriebenen Schnecke 2 eine der konstanten Drehzahl überlagerte periodische Beschleunigung bzw. Verzögerung verleiht. Zweckmäßig ist die Größe dieser Beschleunigung bzw. Verzögerung einstellbar veränderbar. Geeignete elektronische Steuerungen hierfür stehen zur Verfügung.

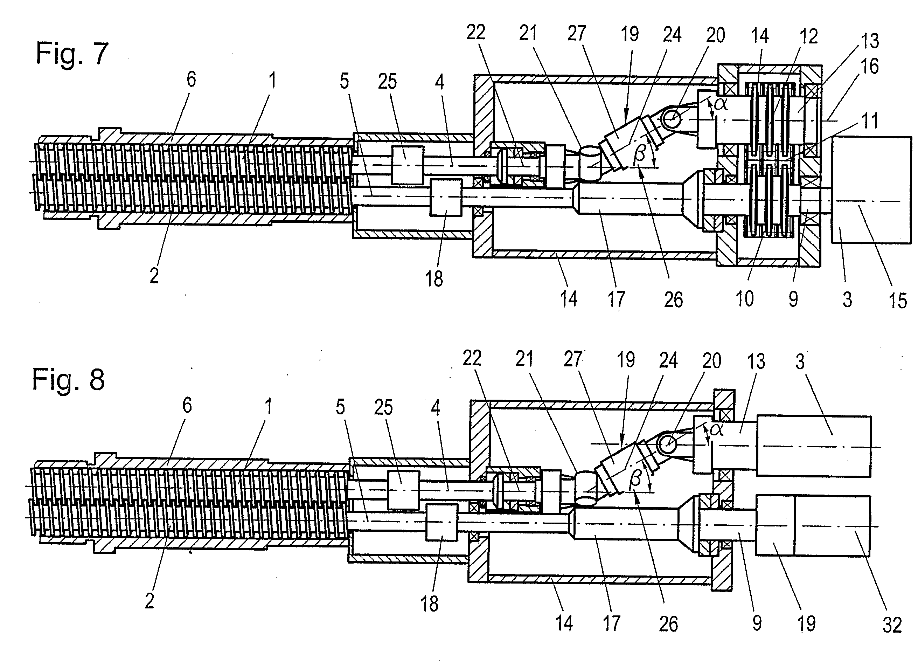

Die nicht-erfindungsgemässige Ausführungsform nach Fig. 7 zeigt einen Doppelschneckenextruder, dessen Bauweise ähnlich ist jener nach Fig. 1. Die beiden Antriebswellen 9, 13 sind zu einander parallel, was eine sehr einfache Konstruktion ergibt. Die beiden Winkel α, β sind daher einander gleich. Um auch bei einer solchen Konstruktion die erwähnte gewünschte periodische Verzögerung bzw. Beschleunigung der Umlaufbewegung der Schnecke 1 zu erzielen, ist das abtriebsseitige Kardangelenk 21 um die, die beiden Kardangelenke verbindende Achse 24 relativ zum antriebsseitigen Kardangelenk 20 um ein geeignetes Maß verschwenkt. Diese Relativverdrehung der beiden Kardangelenke 20, 21 kann in einfacher Weise durch eine Kupplung nach den Fig. 3, 4 erzielt werden. Wie dort erwähnt, kann die erwähnte Relativverdrehung der beiden Kardangelenke 20, 21 einstellbar wählbar sein, sodass man sich an unterschiedliche Verhältnisse des zu verarbeitenden Materiales anpassen kann.

Die nicht-erfindungsgemässige Ausführungsform nach Fig. 8 bildet eine Kombination der Ausführungsformen nach den Fig. 6 und 7. Für die beiden gleichsinnig umlaufenden Schnecken 1, 2 ist die Einrichtung 19 vorgesehen, welche der Umlaufbewegung der Schnecke 2 in Bezug auf die Umlaufbewegung der Schnecke 1 eine periodische Verzögerung bzw. Beschleunigung verleiht, wie sie bei der Ausführungsform nach Fig. 6 ausgebildet ist. Wie in Fig. 8 gezeigt ist, kann zusätzlich hierzu eine Veränderung der Art der erwähnten periodischen Umlaufbewegungsänderung der Schnecke 1 durch eine Kupplung 27 erzielt werden.

Eine weitere Möglichkeit für die Variierung der periodischen Veränderung der axialen Breite des Spaltes 8 besteht darin, die Lage der Achsrichtung der Abtriebswelle 22 relativ zur Lage der Achsrichtung der Antriebswelle 13 einstellbar veränderbar zu machen. Die Anordnung gesonderter Motors 3, 32 für den Antrieb der beiden Schnecken 1, 2 macht es problemlos möglich, die Antriebswelle 13 im Gehäuse 14 hinsichtlich ihrer Richtung einstellbar zu machen, z.B. doch eine geeignete Schwenklagerung.

Eins weitere Konstruktionsmöglichkeit zur Erzielung der periodischen Veränderung der Breite des Spaltes 8 zwischen einander gegenüberliegenden Schneckengängen 7 der beiden Schnecken 1, 2 besteht darin, einer der beiden Schnecken eine periodische Hin- und Herbewegend in Richtung ihrer Achse zu verleihen, welche Bewegung der Umlaufbewegung der Schnecke überlagert ist. Hierfür ist ein zusätzlicher Antrieb für diese Schnecke erforderlich. Dieser zusätzliche Antrieb kann beispielsweise so ausgebildet sein, dass eine ortsfeste Kurvenbahn vorhanden ist, an der sin mit der betreffenden Schnecke verbundener Stössel beim Umlauf der Schnecke abläuft. Es ist zweckmäßig, einen solchen Stössel als Laufrad auszubilden, um Reibungsverluste zu vermeiden. Eins andere Konstruktionsmöglichkeit besteht darin, den erwähnten zusätzlichen Antrieb von einem Kolben-Zylinder-Aggregat zu bilden, das die periodische Hin- und Herbewegung der Schnecke bewirkt. Natürlich muss in beiden Fällen der Drehantrieb der betreffenden Schnecke entsprechend ausgebildet seil um die erwähnte Hin- und Herverschiebung zuzulassen.

Wenngleich in den Fig. 7 und 8 dis Steigung der Schneckengänge der beiden Schnecken 1, 2 konstant eingezeichnet ist, so ist es selbstverständlich möglich, diese Steigung über die Schneckenlänge so unterschiedlich auszubilden, dass sich in Förderrichtung der Schnecken 1, 2 die gewünschte Verdichtung des Materiales ergibt.

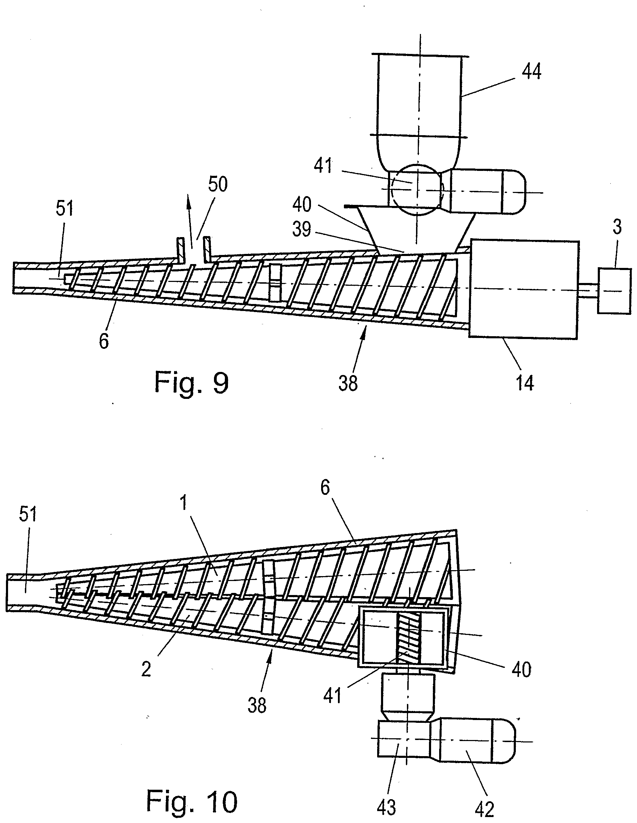

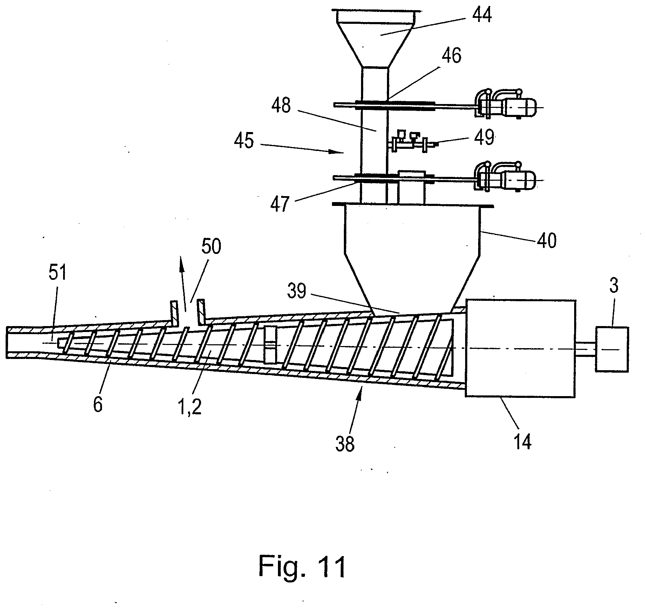

In den Fig. 9 bis 11 ist die Befüllung von Doppelschneckenextrudern gezeigt, wie sie vorstehend beschrieben wurden. Der mit der erfindungsgemäßen Vorrichtung versehene Doppelschneckenextruder 38 (Fig. 9, 10) hat eine im Bereich des einen Stirnendes der Schnecken 1, 2 angeordnete Einzugsöffnung 39 des Schneckengehäuses 6. An diese Einzugsöffnung 38 ist ein Trichter 40 angeschlossen, an dessen Oberseite eine horizontal gelagerte Dosierschnecke 41 liegt, die von einem Motor 42 über ein Getriebe 43 so angetrieben wird, dass das der Dosierschnecke 38 von oben über einen Zulauftrichter 44 zugeführte Material stets in gewünschter Menge den Schnecken 1, 2 zugeführt wird, sodass sowohl Überfüllung vermieden sind, als auch ein Leerlauf der Schnecken. Das zu verarbeitende Material ist häufig thermoplastisches Kunststoffmaterial, welches für Recyclingzwecke aufgearbeitet werden soll. Häufig ist dieses Material gebildet von PET-Mahlgut, das von zerkleinerten Flaschen gebildet ist und unter Vakuum aufgeschmolzen werden muss, sodass eine Oxidation und Degradierung des Materiales soweit als möglich vermieden wird. Wenn eine solche Vakuumbehandlung gewünscht ist, muss die in der Fig. 9 und 10 dargestellte Zuführung des Materiales vakuumdicht erfolgen, eine hierfür geeignete Konstruktion ist in Fig. 11 dargestellt. Hierzu ist an den Trichter 40 eine Vakuum-schleuse 45 angeschlossen, die oben und unten durch vakuumdicht schließende Schieber 46, 47 in an sich bekannter Weise abschließbar ist, sodass ihr Innenraum 48 über eine Evakuierungsleitung 49 evakuierbar ist. Die Dosierschnecke 41 ist in Fig. 11 der Einfachheit halber nicht dargestellt.

Ein anderer häufig vorliegender Anwendungsfall ist die Compoundierung von Kunststoffen unterschiedlicher Art, z.B. Polyethylen niederer und hoher Dichte, oder Polypropylen mit Polyethylen. Die erwähnte periodische Veränderung der Breite des Spaltes 8 zwischen einander gegenüberliegenden Schneckengängen 7 begünstigt die Erzielung eines gewünschten hohen Mischgrades. Ein solcher hoher Mischgrad ergibt sich auch bei der Verarbeitung pastöser bzw. pulveriger Materialien, gleich welcher Art, z. B. keramischer oder mineralischer Materialien, wie Tonerde usw.

Im Gehäuse 6 der Schnecken 1, 2 kann zumindest eine Entgasungsöffnung 50 vorgesehen sein, an welche eine nicht dargestellte Saugleitung angeschlossen sein kann, über welche Gas aus dem Innenraum des Schneckengehäuses 6 abgesaugt werden können.

Das von den Schnecken 1, 2 gemischte bzw. plastifizierte bzw. agglomerierte Material wird am der Einzugsöffnung 39 abgewendeten Stirnende des Schneckengehäuses 6 durch zumindest eine Austrittsöffnung 51 aus dem Schneckengehäuse 6 abgeführt. An diese Austrittsöffnung 51 kann ein Extruderkopf oder eine geeignete Formanlage angeschlossen sein.

Bei gewissen Anwendungsfällen kann es vorteilhaft sein, in den beiden Schnecken 1, 2 eine Leckströmung zuzulassen, Geeignete Maßnahmen hierfür sind bekannt, z.B. die Abflachung zumindest einiger Schneckengänge 7 und bzw. oder die Einarbeitung von Nuten an zumindest einigen Flanken der Schneckengänge 7.

## Patentansprüche

1. Vorrichtung zur Verarbeitung von Kunststoffen durch Mischung und Plastifizierung, mit zumindest zwei nebeneinander in einem gemeinsamen Schneckengehäuse (6) angeordneten Schnecken, deren Schneckengänge (7) miteinander in Eingriff stehen und zum Umlauf um die jeweilige Schneckenachse (4,5) durch zumindest einen Motor (3) angetrieben sind, wobei das zu verarbeitende Material den Schnecken durch zumindest eine im Bereich des einen Stirnendes der Schnecken (1,2) angeordnete Einzugsöffnung (39) des Schneckengehäuses zugeführt wird und das von den Schnecken verarbeitete Kunststoffmaterial das Schneckengehäuse durch zumindest eine im Bereich des anderen Stirnendes der Schnecken angeordnete Austrittsöffnung (51) des Schneckengehäuses verlässt, mit einer den zwischen einander benachbarten Schneckengängen der Schnecken bestehenden Spalt (8) oszillierend verändernden Einrichtung, welche Oszillation den Umlaufbewegungen der Schneckengänge der Schnecken überlagerbar ist, **dadurch gekennzeichnet, dass** die beiden Schnecken (1, 2) Bestandteile eines Doppelschneckenextruders (38) mit konischen Schnecken (1, 2) sind, die in gleicher Umlaufrichtung angetrieben sind.

2. Vorrichtung nach Anspruch 1, **dadurch gekennzeichnet, dass** die Einrichtung (19) für eine (1) der Schnecken (1, 2) eine Gelenkwelle (26) für den Drehantrieb dieser Schnecke (1) aufweist, welche Gelenkwelle (26) zwei miteinander drehschlüssig verbundene Kardangelenke (20, 21) aufweist, deren eines an seiner Antriebsseite mit einer vom Motor (3) angetriebenen Antriebswelle (13) drehschlüssig verbunden ist, wogegen das andere Kardangelenk (21) an seiner Abtriebsseite mit einer mit der Schnecke (1) drehschlüssig verbundenen Abtriebswelle (22) drehschlüssig verbunden ist, wobei die Achsrichtung der Abtriebswelle (22) von der Achsrichtung der Antriebswelle (13) abweicht und bzw. oder die beiden Kardangelenke (20, 21) um die sie verbindende Achse (24) relativ zueinander verschwenkt sind.

3. Vorrichtung nach Anspruch 2, **dadurch gekennzeichnet, dass** die Achsrichtung der Abtriebswelle (22) relativ zur Achsrichtung der Antriebswelle (13) einstellbar veränderbar ist.

4. Vorrichtung nach Anspruch 2 oder 3, **dadurch gekennzeichnet, dass** die drehschlüssige Verbindung der beiden Kardangelenke (20, 21) der Gelenkwelle (26) eine Kupplung (27) aufweist, mit der die Drehlage des einen Kardangelenkes (20) relativ zum anderen Kardangelenk (21) einstellbar veränderbar ist.

5. Vorrichtung nach Anspruch 4, **dadurch gekennzeichnet, dass** die Kupplung (27) eine mit dem einen Kardangelenk (20) drehschlüssig verbundene Steckbuchse (28) aufweist, die mit einer Innenverzahnung (29) versehen ist, in welche Steckbuchse (28) ein mit dem anderen Kardangelenk (21) drehschlüssig verbundener Steckzapfen (31) einsteckbar ist, der an seinem Umfang eine in die Innenverzahnung (29) passende Außenverzahnung (30) aufweist.

6. Vorrichtung nach Anspruch 1, **dadurch gekennzeichnet, dass** die Einrichtung (19) die Schnecken (1, 2) unterschiedlich zur Umlaufbewegung antreibt, wobei eine Schnecke (2) mit konstanter Drehzahl angetrieben ist, wogegen eine andere Schnecke (1) mit einer einer konstanten Drehzahl überlagerten periodischen Beschleunigung bzw. Verzögerung angetrieben ist.

7. Vorrichtung nach Anspruch 6, **dadurch gekennzeichnet, dass** die Größe der periodischen Beschleunigung bzw. Verzögerung einstellbar veränderbar ist.

8. Vorrichtung nach Anspruch 1, **dadurch gekennzeichnet, dass** die Einrichtung (19) eine begrenzte Verschiebarkeit einer Schnecke (1) in ihrer Achsrichtung im Schneckengehäuse (1) vorsieht, und dass ein zusätzlicher Antrieb für diese Schnecke (1) vorhanden ist, welcher der Schnecke (1) eine ihrem Umlauf überlagerte periodische Hin und Herverschiebung in Achsrichtung verleiht.

9. Vorrichtung nach Anspruch 8, **dadurch gekennzeichnet, dass** der zusätzliche Antrieb von einem die periodische Hin- und Herbewegung der Schnecke bewirkenden Kolben-Zylinderaggregat gebildet ist.

10. Vorrichtung nach einem der Ansprüche 1 bis 9, **dadurch gekennzeichnet, dass** die periodische Veränderung des Spaltes (8) 40 bis 60%, insbesondere etwa 50%, der maximal möglichen Spaltweite beträgt.

11. Vorrichtung nach einem der Ansprüche 1 bis 10, **dadurch gekennzeichnet dass** zur Erzielung einer Leckströmung die Spitzen zumindest einiger Schneckengänge abgeflacht sind und bzw. oder an zumindest einigen Flanken der Schneckengänge Nuten vorgesehen sind.

12. Verfahren zur Kunststoffmaterialverarbeitung durch Mischung und Plastifizierung unter Verwendung einer Vorrichtung nach einem der Ansprüchen 1-11 und unter Verwendung zumindest zweier in einem gemeinsamen Gehäuse (6) gelagerter, motorisch angetriebener Schnecken, deren Schneckengänge (7) so einander benachbart liegen, dass zwischen den Schneckengängen der Schnecken (1,2) ein Spalt (8) besteht, **dadurch gekennzeichnet, dass** das Kunststoffen zusätzlich zur Verdichtung, die durch die Förderwirkung der mit gleicher Umlaufrichtung angetriebenen Schnecken (1,2) bewirkt wird, einer periodischen Quetschung durch die mit gleicher Umlaufrichtung angetriebenen konischen Schnecken (1,2) unterworfen wird.

13. Verfahren nach Anspruch 12, **dadurch gekennzeichnet, dass** die periodische Quetschung durch periodische Drehzahländerung zumindest einer Schnecke und bzw. oder durch periodische Verlagerung zumindest einer Schnecke in ihrer Achsrichtung erzielt wird.

## Claims

1. Device for processing plastics materials by mixing and plasticizing, comprising at least two screws located adjacent to one another in a common screw housing, the screw threads of which are engaged with one another and are driven to rotate about the respective screw axis (4, 5) by at least one motor (3), wherein the material to be processed is supplied to the screws through at least one intake opening (39) of the screw housing located in the region of one end of the screws (1,2) and the plastics material processed by the screws leaves the screw housing through at least one outlet opening (51) of the screw housing located in the region of the other end of the screws, comprising an apparatus which in an oscillating manner changes the gap existing between mutually adjacent screw threads of the screws, which oscillation can be superimposed upon the rotational movements of the screw threads of the screws, **characterised in that** the two screws (1, 2) are components of a twin-screw extruder (38) having conical screws (1, 2) which are driven in the same rotational direction.

2. Device as claimed in claim 1, **characterised in that** the apparatus (19) for one (1) of the screws (1,2) has a universal shaft (26) for the rotational driving of this screw (1), which universal shaft (26) has two Cardan joints (20, 21) which are connected to one another for conjoint rotation and of which one is connected on its drive side to a drive shaft (13) for conjoint rotation therewith, said drive shaft being driven by the motor (3), whereas the other Cardan joint (21) is connected on its driven side to a driven shaft (22) for conjoint rotation therewith, said driven shaft being connected to the screw (1) for conjoint rotation therewith, wherein the axial direction of the driven shaft (22) deviates from the axial direction of the drive shaft (13) and/or the two Cardan joints (20, 21) are pivoted relative to one another about the axis (24) connecting them.

3. Device as claimed in claim 2, **characterised in that** the axial direction of the driven shaft (22) can be adjustably changed relative to the axial direction of the drive shaft (13).

4. Device according to claim 2 or 3, **characterised in that** the connection of the two Cardan joints (20, 21) of the universal shaft (26) for conjoint rotation has a coupling (27), by means of which the rotational position of one Cardan joint (20) can be adjustably changed relative to the other Cardan joint (21).

5. Device as claimed in claim 4, **characterised in that** the coupling (27) has a socket (28) which is connected to one Cardan joint (20) for conjoint rotation therewith and is provided with internal toothing (29), into which socket (28) a socket pin (31), which is connected to the other Cardan joint (21) for conjoint rotation therewith, can be inserted and has, on its circumference, external toothing (30) fitting into the internal toothing (29).

6. Device as claimed in claim 1, **characterised in that** apparatus (19) drives the screws (1, 2) differently for the rotational movement, wherein one screw (2) is driven at a constant rotational speed, whereas another screw (1) is driven with a periodic acceleration or deceleration superimposed on a constant rotational speed.

7. Device as claimed in claim 6, **characterised in that** the magnitude of the periodic acceleration or deceleration can be adjustably changed.

8. Device as claimed in claim 1, **characterised in that** the apparatus (19) provides a limited displaceability of one screw (1) in its axial direction in the screw housing (6), and **in that** an additional drive is provided for this screw (1), which provides the screw (1) with a periodic reciprocating displacement in the axial direction superimposed on its rotation.

9. Device as claimed in claim 8, **characterised in that** the additional drive is formed by a piston-cylinder assembly effecting the periodic reciprocating movement of the screw.

10. Device as claimed in any one of claims 1 to 9, **characterised in that** the periodic change of the gap (8) is 40 to 60%, in particular approximately 50% of the maximum possible gap width.

11. Device as claimed in any one of claims 1 to 10, **characterised in that** in order to achieve a leakage flow, the tips of at least some screw threads are flattened and/or grooves are provided on at least some flanks of the screw threads.

12. Method of processing plastics material by mixing and plasticizing using a device as claimed in any one of claims 1-11 and using at least two motor-driven screws which are mounted in a common housing (6) and of which the screw threads (7) are located adjacent to one another such that a gap (8) exists between the screw threads of the screws (1, 2), **characterised in that** plastics materials are subjected not only to compression, which is effected by the conveying action of the screws (1, 2) driven in the same rotational direction, but also to periodic squeezing by the conical screws (1, 2) driven in the same rotational direction.

13. Method as claimed in claim 12, **characterised in that** the periodic squeezing is achieved by periodically changing the rotational speed of at least one screw and/or by periodically displacing at least one screw in its axial direction.

## Revendications

1. Dispositif pour le façonnage de matières plastiques par mélange et la plastification, comportant au moins deux vis sans fin agencées l'une à côté de l'autre dans un carter de vis sans fin (6) commun dont les pas de vis (7) s'engrènent entre eux et sont entraînés en rotation autour de l'axe de vis sans fin (4, 5) respectif par au moins un moteur (3), le matériau à façonner étant amené aux vis sans fin par au moins une ouverture d'alimentation (39) du carter de vis sans fin disposée dans la zone d'une des extrémités frontales des vis sans fin (1, 2) et le matériau en matière plastique façonné par les vis sans fin sortant du carter de vis sans fin par au moins une ouverture de sortie (51) du carter de vis sans fin disposée dans la zone de l'autre extrémité frontale des vis sans fin, et comportant un dispositif modifiant de manière oscillante la fente (8) située entre les pas de vis voisins des vis sans fin, laquelle oscillation peut être superposée aux mouvements de rotation des pas de vis des vis sans fin, **caractérisé en ce que** les deux vis sans fin (1, 2) sont des composants d'une extrudeuse à deux vis (38) avec des vis sans fin (1, 2) coniques qui sont entrainées dans la même direction de rotation.

2. Dispositif selon la revendication 1, **caractérisé en ce que** le dispositif (19) comporte pour l'une (1) des vis sans fin (1, 2) un arbre articulé (26) pour l'entrainement en rotation de cette vis sans fin (1), lequel arbre articulé (26) comporte deux articulations à cardan (20, 21) reliées ensemble solidaire en rotation, dont une est reliée solidaire en rotation au niveau de son côté entrainement à l'arbre de transmission (13) entrainé par le moteur (3) tandis que l'autre articulation à cardan (21) est reliée solidaire en rotation au niveau de son côté de sortie à un arbre de sortie (22) relié solidaire en rotation à la vis sans fin (1), le sens axial de l'arbre de sortie (22) étant différent du sens axial de l'arbre d'entrainement (13) et, ou plus précisément, les deux articulations à cardan (20, 21) étant pivotées l'une par rapport à l'autre autour de l'axe (24) les reliant.

3. Dispositif selon la revendication 2, **caractérisé en ce que** la direction axiale de l'arbre de sortie (22) est modifiable de manière réglable par rapport la direction axiale de l'arbre d'entrainement (13).

4. Dispositif selon la revendication 2 ou 3, **caractérisé en ce que** la liaison solidaire en rotation des deux articulations à cardan (20, 21) de l'arbre articulé (26) comporte un accouplement (27) avec lequel la position de rotation de l'une des articulations à cardan (20) est modifiable de manière réglable par rapport à l'autre articulation à cardan (21).

5. Dispositif selon la revendication 4, **caractérisé en ce que** l'accouplement (27) comporte un connecteur enfichable (28) qui est relié solidaire en rotation à l'une des articulations à cardan (20) et pourvu d'une denture intérieure (29), dans lequel une tige d'emboitement (31) qui comporte au niveau de sa circonférence une denture extérieure (30) s'adaptant dans la denture intérieure (29) est reliée solidaire en rotation à l'autre articulation à cardan (21) et peut être insérée dans le connecteur enfichable (28).

6. Dispositif selon la revendication 1, **caractérisé en ce que** le dispositif (19) entraine les vis sans fin (1, 2) de manière différente pour le mouvement de rotation, une vis sans fin (2) étant entrainée avec une vitesse angulaire constante, tandis qu'une autre vis sans fin (1) est entrainée avec un ralentissement et une accélération périodiques superposés à une vitesse angulaire constante.

7. Dispositif selon la revendication 6, **caractérisé en ce que** l'ampleur du ralentissement et de l'accélération périodiques est modifiable de manière réglable.

8. Dispositif selon la revendication 1, **caractérisé en ce que** le dispositif (19) prévoit une capacité de déplacement limitée d'une vis sans fin (1) dans son sens axial dans le carter de vis sans fin (1)_{[JT1]} et **en ce qu'**un entrainement supplémentaire est présent pour cette vis sans fin (1) qui confère à la vis sans fin (1) un mouvement de va et vient périodique dans la direction axiale superposé à sa rotation.

9. Dispositif selon la revendication 8, **caractérisé en ce que** l'entrainement supplémentaire est formé d'un ensemble piston-cylindre activant le mouvement de va et vient périodique de la vis sans fin.

10. Dispositif selon l'une des revendications 1 à 9, **caractérisé en ce que** la modification périodique de la fente (8) est de 40 à 60 %, en particulier environ 50 % de la largeur de la fente maximale possible.

11. Dispositif selon l'une des revendications 1 à 10, **caractérisé en ce que**, pour obtenir un flux de fuite, les crêtes d'au moins quelques pas de vis sont aplaties et, ou plus précisément, des rainures sont prévues au niveau d'au moins quelques flancs de pas de vis.

12. Procédé de façonnage de matières plastiques par mélange et plastification, utilisant un dispositif selon l'une des revendications 1 à 11 et utilisant au moins deux vis sans fin entrainées par moteur, placées dans un carter (6) commun, dont les pas de vis (7) sont voisins de sorte qu'entre les pas de vis des vis sans fin (1, 2), il existe une fente (8), **caractérisé en ce que** la matière plastique _{[JT2]} est soumise, outre la compression qui est occasionnée par l'effet d'entraînement des vis sans fin (1, 2) entrainées dans le même sens de rotation, à un écrasement périodique par les vis sans fin (1, 2) coniques entrainées dans le même sens de rotation.

13. Procédé selon la revendication 12, **caractérisé en ce que** l'écrasement périodique est obtenu par la modification périodique de la vitesse angulaire d'au moins d'une vis sans fin et/ou par un déplacement périodique d'au moins une vis sans fin dans son sens axial.
